# EUROPÄISCHE PATENTSCHRIFT

(11) **EP 3 645 201 B1**
(45) Veröffentlichungstag und Bekanntmachung des Hinweises auf die Patenterteilung: **20.07.2022**
(21) Anmeldenummer: 18733242.4
(22) Anmeldetag: 20.06.2018
(51) Int. Cl.: B23D 77/02, B23B 51/00

(54) **SCHNEIDWERKZEUG UND SCHNEIDKOPF**
CUTTING TOOL AND CUTTING HEAD
OUTIL DE COUPE ET TÊTE DE COUPE

(30) Priorität: 28.06.2017 DE 102017114380
(43) Veröffentlichungstag der Anmeldung: 06.05.2020
(73) Patentinhaber: Gühring KG, 72458 Albstadt (DE)
(72) Erfinder: BOPP, Michael, 72488 Sigmaringen-Laiz (DE)
(74) Vertreter: Gleim, Christian Ragnar
(86) Internationale Anmeldenummer: PCT/EP2018/066441
(87) Internationale Veröffentlichungsnummer: WO 2019/002050

(56) Entgegenhaltungen:
- EP-A1- 1 419 839
- WO-A1-2008/132740
- WO-A1-2009/071288
- DE-A1- 10 305 991
- DE-B3-102016 111 671

## Beschreibung

Die vorliegende Erfindung betrifft ein Schneidwerkzeug, insbesondere Reibwerkzeug, zur spanabhebenden Herstellung und Bearbeitung von Ausnehmungen und/oder Senkungen eines zu bearbeitenden Bauteils, insbesondere zur Herstellung oder Nachbearbeitung einer Stopfenbohrung, gemäß dem Oberbegriff von Anspruch 1.

Die vorliegende Erfindung betrifft ebenso einen Schneidkopf gemäß dem Oberbegriff von Anspruch 16.

### STAND DER TECHNIK

Reibahlenwerkzeuge werden zur Feinbearbeitung von Bohrungen durch Reiben eingesetzt. Durch den Reibvorgang wird die Oberflächenqualität sowie die Formmaßgenauigkeit von Bohrungen und Ausnehmungen bzw. Vertiefungen in zu bearbeitenden Bauteilen verbessert.

Gattungsgemäße Schneidwerkzeuge werden in Form von Fräsbohrern zur Herstellung von Bohrungen, beispielsweise Wasserstopfenbohrungen in Brennkraftmaschinen, eingesetzt. Insbesondere werden derartige Schneidwerkzeuge in Form von Reibahlenwerkzeugen zur Feinbearbeitung von Bohrungen durch Reiben eingesetzt. Durch den Reibvorgang wird die Oberflächenqualität sowie die Formmaßgenauigkeit von Bohrungen und Ausnehmungen bzw. Vertiefungen in zu bearbeitenden Bauteilen verbessert.

Üblicherweise wird eine Bohrung oder eine Ausnehmung in einem Bauteil in zwei oder mehr Arbeitsgängen hergestellt. In einem ersten Arbeitsgang wird zunächst eine Bohrung oder eine Ausnehmung in einem Bauteil durch einen Spiralbohrer oder einen Fräsbohrer eingebracht, wobei die Stirn- und Seitenoberflächen der Bohrung oder Ausnehmung eine bestimmte Rauigkeit aufweisen. Mittels eines Reibahlenwerkzeugs werden diese Oberflächen in einem zweiten Arbeitsgang auf eine gewünschte Oberflächenqualität nachbearbeitet, wobei typischerweise nur wenige Zehntelmillimeter Material abgetragen werden und z. B. Toleranzen IT7 bis IT5 erreicht werden können.

Insbesondere im Motorenbau werden Wasserstopfenbohrungen vorgesehen, um Kühlflüssigkeit führende Ausnehmungen im Motorblock vorzusehen. Zur Nachbearbeitung derartiger Wasserstopfenbohrungen werden ein- oder mehrstufige Reibahlenwerkzeuge eingesetzt, die eine hohe Oberflächengüte in der Bearbeitung derartiger Ausnehmungen und Bohrflächen erreichen.

Typischerweise weisen gattungsgemäße Schneidwerkzeuge Schneiden am Umfang und/oder am Anschnitt, d. h. am Kopfende des Werkzeugs, auf. Die Schneidkanten sind in der Regel parallel bzw. vertikal zu einer Rotationsachse des Schneidwerkzeugs ausgerichtet. Typische Durchmesser von derartigen Schneidwerkzeugen liegen zwischen 1 mm bis 50 mm, wobei der Schneidkopf, welcher die Schneiden trägt, in der Regel aus Vollhartmetall (VHM) ausgebildet ist. Seit langem sind Schneiden aus Diamant bekannt. In jüngerer Zeit hat sich eine Fertigung von Schneiden aus einem kristallinen Hartwerkstoff, insbesondere einem synthetisch hergestellten Kristallschneidwerkstoff durchgesetzt, wobei beispielsweise in der Schneide Diamantpartikel in einer Metallmatrix eingebettet sind, oder eine Bohrnitridschneide eingesetzt wird. Somit werden in vielen Fällen Diamantschneiden, PKD-Schneiden (polykristalline Diamantschneiden) oder CBN-Schneiden (kubisch kristalline Bohrnitridschneiden) eingesetzt, die durch Löten oder Schweißen dauerhaft auf dem Schneidkopf befestigt sind oder mittels geeigneter Befestigungsmittel auswechselbar an dem Schneidkopf angebracht sind.

Im Bearbeitungsvorgang ergeben sich Materialspäne, die sich an den Schneiden stauen können, und deren Entfernung von der Bearbeitungsstelle beispielsweise mittels Kühlmittelspülung oder durch mehrfaches Herausnehmen des Schneidwerkzeugs aus der Bohrung und Säubern der Bohrung erfolgt. Eine zuverlässige Abfuhr von Spänen im Rahmen einer kontinuierlichen Bearbeitung und ohne aufwendige Säuberungsmaßnahmen ist mit derzeit bekannten Schneidwerkzeugen nur unbefriedigend möglich. Gerade in einer Bearbeitung von Motorblöcken ist eine hochreine Bearbeitung des Motorblockinnenraums angestrebt, so dass Späne zuverlässig abgeführt werden sollen.

Aus der WO 2009/071288 A1, die die Oberbegriffe der unabhängigen Ansprüche 1 und 16 offenbart, ist ein Reibahlenwerkzeug bekannt, welches zur Spanführung ein Spanleitelement mit einer Leitfläche aufweist, welche mit einer Spanfläche der Schneide einen schlitzförmigen Aufnahmekanal bildet. Das Spanleitelement ist quaderförmig ausgebildet und weist eine ebene Leitfläche auf, die mit einer sich an der Messerplatte rückwärtig anschließenden Spanfläche einen Aufnahmekanal bildet, der an den Aufnahmespalt grenzt. In diesem Aufnahmespalt werden die Späne in Richtung der Messerplatte angrenzenden Seitenfläche des Spanraums abgelenkt und abgeleitet.

In der DE 10 2005 034 422 A1 ist eine Reibahle zur spanenden Bearbeitung von Bohrungen in schwer zerspanbaren Werkstücken offenbart. Das Werkzeug umfasst mindestens eine Messerplatte mit einer Schneide und mindestens eine Führungsleiste. Mit Hilfe der Führungsleiste wird die Reibahle in der zu bearbeitenden Bohrung geführt.

Ein weiteres Reibahlenwerkzeug mit einem Spanführungselement ist aus der EP 2 839 913 A1 bekannt.

Ein gattungsgemäßes, als Reibahlenwerkzeug ausgestaltetes Schneidwerkzeug ist aus der nachveröffentlichten DE 10 2016 111 671 B3 bekannt. Derartige Werkzeuge sind aufgrund der komplexen Form aufwändig in der Herstellung. Um bei Verschleiß der Schneide nicht das gesamte Werkzeug ersetzen zu müssen, können wechselbare Schneidplatten vorgesehen werden. Bei einem Schneidplattenwechsel besteht jedoch ein erhöhter Justieraufwand und/oder die Gefahr von Fehljustierungen, die eine Abweichung von vorgegebenen Maßtoleranzen zur Folge haben können.

Die DE 10 2010 021 212 A1 zeigt ein einteiliges Bohrwerkzeug mit einem Werkzeugkopf, an dem zumindest zwei radial verlaufende Hauptschneiden angeordnet sind. Durch den Werkzeugkopf erstreckt sich ein Spanabführkanal, der vor der jeweiligen Hauptschneide angeordnet ist. Dieser besitzt einen geschlossenen Querschnitt und kann sich von der Hauptschneide zum Schaftabschnitt hin aufweiten. Eine Späneabführpassage ist direkt an der Hauptschneide angeordnet, die allerdings nicht als Reibschneide ausgebildet ist, und demnach an der Frontseite des Werkzeugs geöffnet ist. Die dortige Späneabführpassage weist einen geschlossenen Querschnitt auf, und der der Schneidkopf ist nicht abnehmbar.

Eine Druckschrift der Komet Group GmbH "The Cutting Edge News- Die ^{®}evolution zur AMB 2016" anlässlich der Messe AMB vom 13. bis 17. September 2016 in Stuttgart zeigt die Abbildung eines PKD-Aufbohrwerkzeugs für Wasserstoffbohrungen. Die Späne werden durch eine geschwungene Kühlkanalführung aus der Bohrung transportiert. Der Schneidkopf ist nicht als separates Bauteil ausgebildet und der Spanabführbereich ist nicht in Form eines Spannkorridors ausgebildet, der innerhalb des Schneidkopfes angeordnet ist.

In der DE 102 22 040 A1 wird ein Fräswerkzeug mit einem innenliegenden, im Wesentlichen symmetrisch zur Werkzeuglängsachse angeordneten Spanabführkanal offenbart. Der abnehmbare Fräskopf besitzt Stirnschneiden sowie Umfangsschneiden. Durch eine Öffnungsfläche im Fräskopf werden die Späne dem Spanabführkanal zugeleitet und nicht seitlich aus dem Werkzeugkopf herausgeleitet.

Es ist die Aufgabe der Erfindung, ein Schneidwerkzeug der eingangs genannten Art zu schaffen, welches kostengünstig zu fertigen ist und eine hohe Maßgenauigkeit aufweist, insbesondere auch bei einem Auswechseln der Schneide.

### OFFENBARUNG DER ERFINDUNG

Die Lösung der Aufgabe erfolgt durch ein Reibahlenwerkzeug mit den Merkmalen des Anspruchs 1. Vorteilhafte Ausführungsformen der Erfindung sind Gegenstand der abhängigen Ansprüche.

Das erfindungsgemäße Schneidwerkzeug, insbesondere Reibwerkzeug zur Herstellung oder Nachbearbeitung einer Stopfenbohrung, umfasst einen Einspannschaft und einen Werkzeugträger mit einem Schneidkopf und zumindest einer an einem axialen Schneidkopfende angeordneten Schneide, die zumindest teilweise als Reibschneide ausgebildet ist, wobei der Werkzeugträger einen Spanaufnahmeraum umfasst, der ausgeformt ist, Materialspäne eines zu bearbeitenden Bauteils aufzunehmen, und der durch eine an die Schneide angrenzende Spanmitnahmefläche und eine hierzu abgewinkelte, insbesondere rechtwinklig ausgerichtete Spanführungsfläche begrenzt ist, welche von dem Schneidkopfende in Richtung Einspannschaft radial nach außen, insbesondere konkav oder abgewinkelt verläuft, und an einer Umfang Seite des Werkzeugträgers mündet wobei der Schneidkopf einen an die Schneide angrenzenden Spankorridor umfasst, der ausgeformt ist, Materialspäne eines zu bearbeitenden Bauteils aufzunehmen, und der einen radial verlaufenden Spanspalt und zumindest eine erste, eine zweite und eine dritte sich von dem Schneidkopfende in axialer Richtung erstreckenden Korridorfläche umfasst, wobei die erste Korridorfläche zumindest einen Teilabschnitt der Spanmitnahmefläche umfasst, wobei die zweite Korridorfläche sich in axialer Richtung abgewinkelt oder gekrümmt erstreckt, um den Spankorridor vom Spanspalt her in Richtung Spanaufnahmeraum aufzuweiten, und wobei die dritte Korridorfläche den Spankorridor an einer Umfangsseite des Schneidkopfs zumindest teilweise begrenzt und/oder verschließt, insbesondere am frontseitigen Ende abschließt und/oder verschließt. Es wird vorgeschlagen, dass der Schneidkopf als ein separates Bauteil ausgebildet ist und an einem Grundkörper des Werkzeugträgers lösbar oder dauerhaft befestigt ist, und dass der Spankorridor im Wesentlichen innerhalb des Schneidkopfs ausgebildet ist.

Durch die vorliegende Erfindung wird ein Schneidwerkzeug geschaffen, welches einen in den Spanaufnahmeraum mündenden Spankorridor aufweist, welcher umfangsseitig vollständig geschlossen ist und Späne von einer umfangsseitig angeordneten Reibschneide abtransportieren kann. Der von den zumindest drei Spanführungsflächen vollständig umgebene Spankorridor bewirkt, dass Materialspäne, die von einer Schneidkante der Schneide, einer Reib Schneide, am zu bearbeitenden Bauteil abgehoben werden, zuverlässig in den oberhalb der Schneidkante liegenden Spanaufnahmeraum transportiert werden. Es ist praktisch unmöglich, dass Späne, die in den Spankorridor eintreten, wieder aus diesem axial nach vorne in den Bearbeitungsbereich gelangen können. Der Spankorridor wird von wenigstens drei Korridorflächen definiert, wobei die erste Korridorfläche durch die Schneide und einen Teilabschnitt der an die Schneide angrenzenden Spanmitnahmefläche definiert ist. Die zweite Korridorfläche wird von einer Außenfläche des Spanführungsabschnitts definiert. Die zweite Korridorfläche ist derart geformt, dass sie den Spankorridor in Richtung Einspannschaft zu dem Spanaufnahmeraum hin aufweitet. Somit wird ein sich in Richtung des Spanaufnahmeraums erweiternder Trichter ausgebildet, durch den von der Schneidkante abgetragene Materialspäne durch die Rotationsbewegung der Reibahle in Richtung Spanaufnahmeraum gedrängt und von der Schneidkante weggeführt werden. Die dritte Spanführungsfläche begrenzt hierbei den Spankorridor an der Umfangsseite des Schneidwerkzeugs und verhindert u.a., dass Materialspäne dort mit der bereits bearbeiteten Seitenwand der zu bearbeitenden Bohrung in Kontakt kommen können. An der Umfangseite des Schneidkopfes verbleibt folglich nur ein Schlitz, der den Spanspalt ausbildet und der direkt an der Schneide der Reibschneide angeordnet ist und eine Öffnung für den Spankorridor ausbildet. Abgesehen von diesem Spanspalt ist der Spannkorridor geschlossen bezüglich der Umfangseite des Schneidkopfes ausgebildet. Ausgehend von diesem Spannspalt werden die Späne folglich in den Spannkorridor geleitet, der umfangsseitig vollständig geschlossen ist. Ein derartiger Spannspalt wird als radialer Spannspalt bezeichnet. Ein derartiger Spannspalt verläuft folglich nicht bis zur Mittelachse bzw. Drehachse des Werkzeugs und ist lediglich im Bereich der Reibschneide angeordnet. Umfasst die Reibschneide eine erste sowie eine zweit Schneidkante, wobei eine erste Schneidkante zumindest abschnittsweise am axialen Schneidkopfende und eine zweite Schneidkante am Außenumfang des Schneidkopfes angeordnet sind, kann der Spannspalt entlang der ersten Schneidkante verlaufen. Eine derartige erste Schneidkante ist jedoch nur im Randbereich des Schneidkopfes an der Frontseite angeordnet und verläuft nicht zur Rotationsachse des Werkzeugs, da eine derartige erste Schneide keine Bohrschneide ausbildet. Durch eine derartige Anordnung des Spannspalts sowie des Spannkorridors wird vermieden, dass sich die Materialspäne an der Seitenwandung des zu bearbeitenden Bauteils verhaken können und dadurch unter Umständen die Qualität der bereits bearbeiteten Oberfläche beeinträchtigen kann. Ferner bildet der geschlossene Spankorridor eine Art Düse, welche an die Schneidkanten zugeführtes Kühlmittel zusammen mit den Materialspänen in die gewünschte Richtung ableitet. Schließlich vermindert sich die Gefahr, dass beim Zurückziehen des Schneidwerkzeugs aus der Bohrung versehentlich Materialspäne zurück in die Bohrung fallen und die Funktion des Bauteils im späteren Betrieb beeinträchtigen, was insbesondere beim Bearbeiten von Wasserstopfenbohrungen in Motorblöcken von Vorteil ist.

Die zumindest drei Korridorflächen sind sämtlich an dem separaten Schneidkopf vorgesehen. Dadurch ergibt sich die vorteilhafte Möglichkeit, diesen Werkzeugbereich mittels eines additiven Fertigungsverfahrens, insbesondere mittels selektiven Laserschmelzens durch Auftragen von Material herzustellen. Derartige Fertigungsverfahren sind in besonderer Weise dazu geeignet, die teilweise komplexen Strukturen des Schneidkopfs mit überschaubarem Kosten- und Fertigungsaufwand zu schaffen. Die übrigen Bereiche des Schneidwerkzeugs, d. h. der Werkzeugträgers und/oder der Einspannschaft, können in konventioneller Weise, z. B. mittels Guss- und/oder Zerspanungsverfahren, hergestellt werden, wobei jedoch auch hier eine zumindest teilweise Fertigung mittels additiver Verfahren nicht ausgeschlossen ist.

Der separate Schneidkopf kann lösbar mit dem Grundkörper verbunden sein, so dass dieser ausgetauscht werden kann, wenn die zumindest eine Schneide und/oder andere stark beanspruchte Bereiche wie der Spankorridor verschlissen sind. Zudem ist es auch möglich, nach Art eines Baukastensystems Schneidköpfe etwa mit unterschiedlichen Schneidengeometrien, Maßtoleranzen und/oder Schneidenmaterialien einzusetzen. Ein additives Fertigungsverfahren ermöglicht eine sehr komplexe Geometrie des Spannkorridors mit speziell ausgeformten Korridorflächen.

Grundsätzlich kann der Schneidkopf auch dauerhaft bzw. nicht lösbar mit dem Grundkörper verbunden sein.

Die Schneide kann als wechselbare Schneide, insbesondere Schneidplatte, ausgebildet sein oder mit dem Schneidkopf fest verbunden, insbesondere verlötet, sein. Die Anzahl der Schneiden kann insbesondere zwei betragen, wobei auch Schneidwerkzeuge mit einer größeren Anzahl von Schneiden, z. B. drei oder vier, realisiert werden können. Die Schneiden können derart angeordnet sein, dass sie über die Mitte oder auch nicht über die Mitte schneiden. Bevorzugt sind alle Schneiden als Reibschneiden ausgebildet.

Mit anderen Worten werden die Späne von einer Schneide am Werkzeugkopf, die bevorzugt als Reibschneide an einer Umfangseite des Werkzeugkopfs angeordnet ist, in einen Spannkorridor geführt und von dort in einen Spannaufnahmeraum, der im Werkzeugträgern angeordnet ist, weitergeleitet. Bevorzugt werden die Späne an einer Umfangseite des Werkzeugträgers abgeleitet. Dies bedeutet, dass bevorzugt der Spanaufnahmeraum an der Umfangseite des Werkzeugträgers mündet. Späne werden folglich nicht in einem zentral angeordneten Spanabführkanal durch den Werkzeugträger sowie Einspannschaft abtransportiert.

Gemäß einer vorteilhaften Ausführungsform können alle Schneiden als Reibschneiden ausgebildet sein. Ein derartiges Schneidwerkzeug bildet ein Reibwerkzeug beispielsweise in Form einer Reibahle aus.

In einer vorteilhaften Ausführungsform kann eine Schneidkante der Schneiden zumindest teilweise an der Umfangseite des Werkzeugträgers verlaufen und eine Reibschneidkante ausbilden. Eine derartige Schneidkante ist bevorzugt als Seitenschneidkante an der Umfangseite des Werkzeugträgers angeordnet. Der Werkzeugkopf bildet folglich den Werkzeugkopf eines Reibwerkzeugs sowie einer Reibahle aus.

In einer vorteilhaften Ausführungsform kann der Spannkorridor zumindest teilweise im Bereich der Schneide zur Umfangseite des Schneidkopfes hin offen ausgebildet sein. Dieser offene Bereich bildet bevorzugt den Spanspalt aus. Ausgehend von diesem Spanspalt werden die Späne in den Spankorridor geleitet, der umfangsseitig vollständig geschlossen ist. Mit anderen Worten ist der Spankorridor im Bereich der Schneide an der umfangsseitig von der dritten Korridorfläche nicht oder nicht vollständig begrenzt. Dadurch werden die Materialspäne, die von einer umfangsseitig angeordneten Schneidkante, einer Reibschneidkante, abgetragen werden zuverlässig in den Spankorridor geleitet und von diesem abgeführt.

Vorteilhafterweise ist vorgesehen, dass die Schneide eine erste Schneidkante am axialen Schneidkopfende und eine zweite Schneidkante am Außenumfang des Schneidkopfs umfasst, wobei sich der Spanspalt entlang der ersten und der zweiten Schneidkante erstreckt, so dass der Spankorridor im Bereich der zweiten Schneidkante zur Umfangsseite des Schneidkopfendes hin offen ist. Mit anderen Worten ist der Spankorridor im Bereich der zweiten Schneidkante von der dritten Korridorfläche nicht oder nicht vollständig begrenzt. Dadurch ist gewährleistet, dass auch die von der zweiten, umfangsseitig vorgesehenen Schneidkante abgetragenen Materialspäne zuverlässig in den Spankorridor eintreten können und von diesem abgeführt werden. Diese zweite Schneidkante bildet eine Seitenschneidkante aus, die bevorzugt als Reibschneidkante ausgebildet ist.

Gemäß einer vorteilhaften Ausführungsform weist der Schneidkopf einen zentralen Befestigungszapfen auf, welcher in einer zentralen Schneidkopfaufnahme des Grundkörpers aufgenommen ist. Dadurch ist eine einfache Montage möglich. Der Befestigungszapfen kann einen runden Querschnitt aufweisen, wobei zur Ausrichtung und zur Schneidkraftübertragung zwischen Schneidkopf und Grundkörper z. B: eine Abflachung am Befestigungszapfen und eine hierzu komplementäre Erhebung in der Schneidkopfaufnahme vorgesehen sein können. Auch andere Querschnittsformen, insbesondere quadratische, dreieckige oder allgemein polygonale Querschnitte mit oder ohne Rotationssymmetrie können vorgesehen werden.

Gemäß einer weiteren vorteilhaften Ausführungsform kann der Befestigungszapfen in der Schneidkopfaufnahme des Grundkörpers verklemmt oder verspannt sein. Ein Verklemmen kann z. B. mittels einer oder mehrerer Klemmschrauben erfolgen. Ein Verspannen kann insbesondere mithilfe eines am Grundkörper angeordneten Hydrodehnspannfutters durchgeführt werden.

Gemäß einer weiteren vorteilhaften Ausführungsform weist der Schneidkopf einen ersten Kühlmittelkanal auf, welcher sich in axialer Richtung durch den Befestigungszapfen hindurch erstreckt und mit einer im Grundkörper vorgesehenen Kühlmittelzuführung in Fluidverbindung steht. Hierdurch kann in besonders einfacher Weise Kühlmittel leckfrei an den Schneidkopf zugeführt werden. Separate Kühlmittelverbindungen zwischen dem Schneidkopf und dem Grundkörper sind nicht erforderlich.

Gemäß einer weiteren vorteilhaften Ausführungsform kann der Schneidkopf zumindest einen zweiten Kühlmittelkanal aufweisen, welcher sich im Wesentlichen in radialer Richtung erstreckt und mit dem ersten Kühlmittelkanal in Fluidverbindung steht. Der oder die zweiten Kühlmittelkanäle leiten das Kühlmittel von dem zentralen ersten Kühlmittelkanal sternförmig zu den Schneiden bzw. den Spankorridoren.

Gemäß noch einer weiteren vorteilhaften Ausführungsform weist die zweite Korridorfläche zumindest einen Kühlmittelauslass auf. Der Kühlmittelauslass ist vorteilhafterweise mit dem zweiten Kühlmittelkanal verbunden und kann derart geformt sein, dass zumindest ein Teil des austretenden Kühlmittels auf die Schneidkante trifft, um diese zu kühlen und zu schmieren. Weiterhin kann zumindest ein weiterer Teil des austretenden Kühlmittels in den Spankorridor eingeleitet werden, um einen störungsfreien Abtransport der Materialspäne zu unterstützen.

Vorteilhafterweise ist der Kühlmittelauslass als Nut ausgebildet, welche insbesondere parallel zu einer Kopfschneidkante der Schneide verläuft. Hierdurch wird Kühlmittel gleichmäßig über die Schneidkante verteilt. Zusätzlich können eine oder beide Kanten der Nut als Spanbrechkante wirken.

Vorteilhafterweise ist die dritte Korridorfläche an einem Wandungsabschnitt des Schneidkopfendes ausgebildet, wobei eine der dritten Korridorfläche gegenüberliegende Außenfläche des Wandungsabschnitts einen Teilabschnitt einer Umfangsfläche des Schneidkopfendes bildet. Mit anderen Worten weist das Schneidkopfende im Bereich des Spankorridors einen in Umfangsrichtung verlaufenden Wandungsabschnitt auf, welcher mit seiner einen Seite die dritte Korridorfläche und mit seiner anderen Seite eine umfangsseitige Außenfläche des Werkzeugträgers definiert. Der Wandungsabschnitt weist vorzugsweise nur eine geringe Wandungsstärke von einigen Zehntelmillimetern auf.

Gemäß einer vorteilhaften Ausführungsform ist der Spanaufnahmeraum umfangsseitig offen. Die dritte Korridorfläche bzw. der Wandungsabschnitt erstreckt sich somit nicht über die gesamte Umfangsseite des Schneidkopfendes, sondern tatsächlich nur über den Bereich des Spankorridors, so dass der Spanaufnahmeraum an seiner Umfangsseite eine Austrittsöffnung für die aufgenommenen Materialspäne aufweist, so dass der Spanaufnahmeraum während oder am Ende der Bearbeitung des Bauteils von Materialspänen entleert werden kann. Der Wandungsabschnitt muss jedoch nicht zwingend auf den Bereich des Schneidkopfs beschränkt sein, sondern es kann auch ein Teilbereich des Spanaufnahmeraums am Grundkörper umfangsseitig überdeckt sein.

Gemäß einer weiteren vorteilhaften Ausführungsform weist die Schneide eine Spanleitfläche auf, welche einen Teilabschnitt der Korridorfläche bildet, wobei die Spanleitfläche flächenbündig zu der Spanmitnahmefläche verläuft. Vorzugsweise ist demnach die gesamte erste Korridorfläche, von der Schneidkante an, plan. Vorteilhafterweise kann an dem Grundkörper umfangsseitig zumindest eine Zusatzschneide angeordnet sein, deren Schneidkante gegenüber der Drehachse des Schneidwerkzeugs geneigt verläuft. Mithilfe dieser Zusatzschneide kann eine zu bearbeitende Bohrung an ihrer Öffnung mit einer Fase versehen werden, wobei die Neigung der Schneidkante entsprechend dem Neigungswinkel der Fase gewählt wird. Die Zusatzschneide ist vorteilhafterweise unmittelbar benachbart zum Schneidkopf angeordnet.

Die vorliegende Erfindung betrifft ferner einen Schneidkopf gemäß Anspruch 16 für ein Schneidwerkzeug, insbesondere zur Herstellung oder Nachbearbeitung einer Stopfenbohrung, welcher an einem Grundkörper eines Werkzeugträgers des Schneidwerkzeugs lösbar oder dauerhaft befestigbar ist, wobei der Schneidkopf zumindest eine an einem axialen Schneidkopfende angeordneten Schneide aufweist und einen an die Schneide angrenzenden Spankorridor umfasst, der ausgeformt ist, Materialspäne eines zu bearbeitenden Bauteils aufzunehmen, und der einen radial verlaufenden Spanspalt und zumindest eine erste, eine zweite und eine dritte sich von dem Schneidkopfende in axialer Richtung erstreckenden Korridorfläche umfasst, wobei die erste Korridorfläche zumindest einen Teilabschnitt einer an die Schneide angrenzenden Spanmitnahmefläche umfasst, wobei die zweite Korridorfläche sich in axialer Richtung abgewinkelt oder gekrümmt erstreckt, um den Spankorridor vom Spanspalt her aufzuweiten, und wobei die dritte Korridorfläche den Spankorridor an einer Umfangsseite des Schneidkopfs zumindest teilweise frontendseitig abschließt und begrenzt.

Die vorteilhaften, den Schneidkopf betreffenden Merkmale, die vorstehend im Zusammenhang mit dem Schneidwerkzeug erläutert wurden, können selbstverständlich auch bei dem erfindungsgemäßen Schneidkopf alleine als vorteilhafte Ausführungsformen verwirklicht sein.

### ZEICHNUNGEN

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:
- **Fig. 1**: eine perspektivische Ansicht einer Ausführungsform eines Schneidwerkzeugs;
- **Fig. 2 und** 3: weitere perspektivische Ansichten des Schneidwerkzeugs von Fig. 1 mit abgenommenem Schneidkopf;
- **Fig. 4 und** 5: Schnittdarstellungen des Schneidwerkzeugs von Fig. 1 bis 3;
- **Fig. 6 und** 7: perspektivische Ansichten des Schneidkopfs des Schneidwerkzeugs von Fig. 1 bis 3;
- **Fig. 8**: eine perspektivische Detailansicht des Schneidkopfs von Fig. 6 und 7; und
- Fig. 9 bis 11: verschiedene Schnittdarstellungen des Schneidkopfs von Fig. 6 und 7.

In den Figuren sind gleiche oder gleichartige Komponenten mit gleichen Bezugszeichen beziffert.

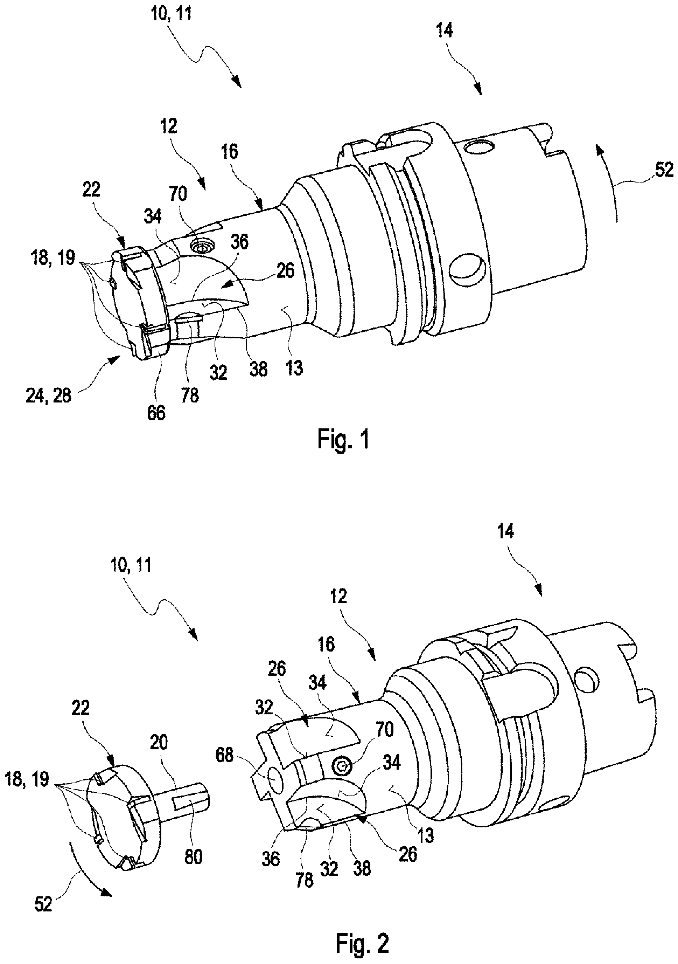

Fig. 1 bis 5 zeigen ein Ausführungsbeispiel eines Schneidwerkzeugs 10 bzw. eines Reibwerkzeug 11, welches hier als Reibahlenwerkzeug ausgestaltet ist. Das Schneidwerkzeug 10 kann zur Bearbeitung eines Bauteils um die Dreh- oder Längsachse in einer Arbeitsdrehrichtung 52 rotiert werden. Es umfasst einen Werkzeugträger 12 und einen Einspannschaft 14, der in einen Bohrschaft einer Arbeitsmaschine eingespannt werden kann. Der Einspannschaft 14 kann insbesondere als Hohlschaftkegel-Aufnahme (HSK-Aufnahme) ausgebildet sein.

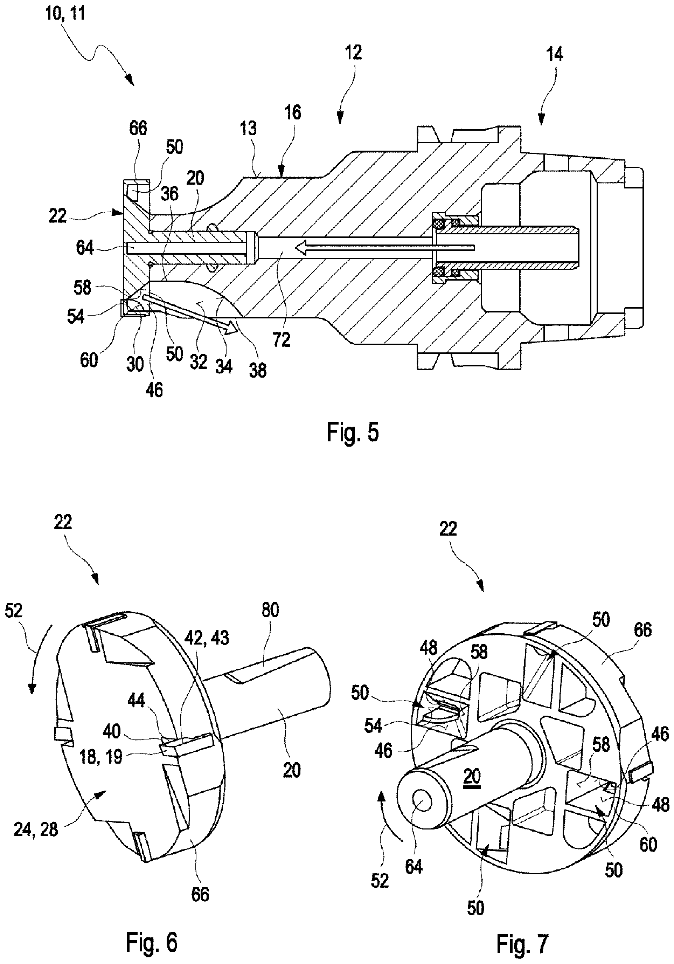

Der Werkzeugträger 12 umfasst einen Grundkörper 16 und einen lösbar daran befestigten separaten Schneidkopf 22, der einen Schneidbereich 28 am Schneidkopfende 24 umfasst. Der Schneidkopf 22 (siehe auch Fig. 5 bis 11) weist einen annähernd zylindrischen zentralen Befestigungszapfen 20 auf, der in einer zentralen Schneidkopfaufnahme 68 des Grundkörpers 16 aufgenommen und dort mithilfe von zwei Klemmschrauben 70 verklemmt ist. Zur verdrehsicheren Ausrichtung und zur Schneidkraftübertragung zwischen Schneidkopf 22 und Grundkörper 16 ist am Befestigungszapfen 20 eine Abflachung 80 und eine hierzu komplementäre Erhebung in der Schneidkopfaufnahme 68 vorgesehen.

Am Schneidkopfende 24 sind vier Schneiden 18 anlötet, welche im Ausführungsbespiel nicht über die Mitte schneiden. In dieser Ausführungsform sind diese Schneiden 18 als Reibschneiden 19 ausgebildet. Die Schneiden 18 können beispielsweise aus einem PKD- oder einem CBN-Material gesintert sein. Jede Schneide 18 weist eine Seitenschneidkante 42 und eine Kopfschneidkante 40 auf. Die Seitenschneidkante 42 bildet eine Reibschneidkante 43 aus. Es kann grundsätzlich auch eine abweichende Schneidenanordnung bzw. -geometrie gewählt werden. So kann eine abweichende Anzahl von Schneiden vorgesehen werden, z. B. zwei. Zumindest ein Teil der Schneiden kann auch über die Mitte schneiden. Bevorzugt sind die Schneiden 18 jedoch als Reibschneiden 19 ausgebildet.

Am Grundkörper 16 sind im Übergangsbereich zum Schneidkopf 22 umfangsseitig zwei zu einer Längsachse des Schneidwerkzeugs geneigt verlaufende Zusatzschneiden 78 vorgesehen, welche den Öffnungsrand einer zu bearbeitenden Bohrung oder Ausnehmung mit einer Fase versehen. Diese Zusatzschneiden 78 können auch entfallen.

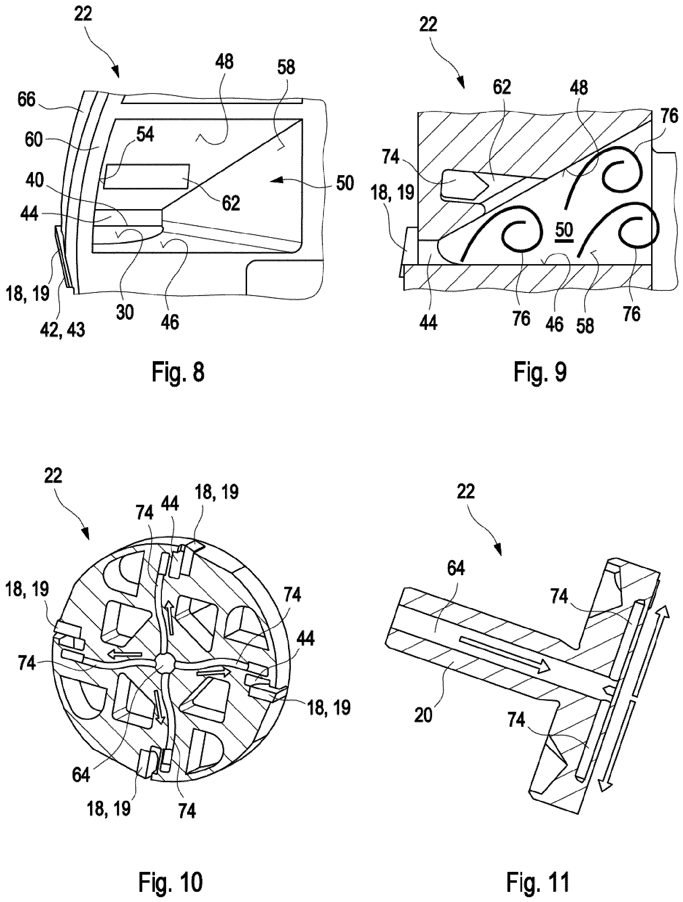

Der Schneidbereich 28 umfasst einen Stirnbereich, in dem die Kopfschneidkanten 40 an dem Anschnittboden einer Bohrung oder Ausnehmung reiben, sowie einen Umfangsbereich, in dem die Seitenschneidkanten 42 eine Wandfläche der Bohrung oder Ausnehmung reiben und Reib Schneidkanten 43 ausbilden. Von den Schneidkanten 40, 42, 43 abgetragene Späne 76 können jeweils durch einen Spanspalt 44 in einen der jeweiligen Schneide 18 zugeordneten, im Inneren des Schneidkopfs 22 ausgebildeten trichterartigen Spankorridor 50 eintreten. Jeder Spankorridor 50 wird - wie insbesondere in Fig. 7 und 8 gut zu erkennen ist - von einer ersten Korridorfläche 46, einer zweiten Korridorfläche 48, einer dritten Korridorfläche 54 und einer vierten Korridorfläche 58 begrenzt und erweitert sich in seinem Querschnitt in Richtung des Einspannschafts 14.

Die Spankorridore 50 münden in jeweilige am Grundkörper 16 angeordnete Spanaufnahmeräume 26, so dass Späne 76 durch die Spankorridore 50 hindurch in die Spanaufnahmeräume 26 transportiert werden können.

Jeder Spanaufnahmeraum 26 wird jeweils durch eine plane Spanmitnahmefläche 32, die flächenbündig und parallel zu einer Spanleitfläche 30 der Schneide 18 verläuft, und eine hierzu rechtwinklig abgewinkelte Spanführungsfläche 34 definiert, wobei die Spanführungsfläche 34 in Richtung des Einspannschafts 14 konkav gewölbt ist, um aufgenommene Späne nach außen außerhalb des Bearbeitungsbereichs abtransportieren zu können. Bevorzugt wendet daher der Spannaufnahmeraum an eine Umfangseite 13 des Werkzeugträgers 12. Somit wird durch die nach außen weisende Spanführungsfläche 34 ein Abtransport der Späne vom Bearbeitungsbereich erreicht. Die Spanmitnahmefläche 32 wird durch eine gekrümmt verlaufende Innenkante 36, an der die Spanführungsfläche 34 ansetzt, und in einem dem Einspannschaft 14 zugewandten Teilbereich durch eine am Umfang des Grundkörpers 16 parallel zu der Drehachse der Schneidwerkzeugs 10 verlaufende Außenkante 38 begrenzt.

Wie insbesondere in Fig. 5 gut zu erkennen ist, bildet die Spanleitfläche 30 zusammen mit einem Teilabschnitt der Spanmitnahmefläche 32 die erste Korridorfläche 46. Die zweite Korridorfläche 48 verläuft gegenüberliegend der ersten Korridorfläche 46 und zu dieser geneigt, so dass sich der Querschnitt des Spankorridors 50 in Richtung Einspannschaft 14 betrachtet erweitert.

Die in Fig. 5 und 7 gut erkennbare dritte Korridorfläche 54 grenzt unmittelbar an die erste und zweite Korridorfläche 46, 48 an und begrenzt den Spankorridor 50 umfangsseitig auf einem Großteil seiner Länge, d.h. zwischen dem Spanspalt 44 und dem Spanaufnahmeraum 26. Der Spanspalt 44 erstreckt sich entlang der Schneidkanten 40, 42, so dass der Spankorridor 50 im Bereich der Seitenschneidkante 42 zur Umfangsseite 66 des Werkzeugträgers 12 hin zumindest teilweise offen ist, d.h. der Spankorridor 50 ist im Bereich der Seitenschneidkante 42 von der dritten Korridorfläche 54 zumindest teilweise nicht begrenzt.

Als eine weitere Begrenzungsfläche des Spaltkorridors 50 wird die vierte Korridorfläche 58 (Fig. 5, 7 und 8) durch einen der dritten Korridorfläche 54 gegenüberliegenden Teilabschnitt der Spanführungsfläche 34 definiert, der sich in den Spankorridor 50 hinein erstreckt und gegenüber der dritten Korridorfläche 54 geneigt verläuft.

Jeweilige Übergänge zwischen den Korridorflächen 46, 48, 54, 58 können kantenförmig oder kontinuierlich, d.h. ausgerundet oder ineinander übergehend, ausgebildet sein.

Das Schneidwerkzeug 10 weist eine innerhalb des Einspannschafts 14 und des Grundkörpers 16 verlaufende, als zentrale axiale Bohrung ausgebildete Kühlmittelzuführung 72 auf.

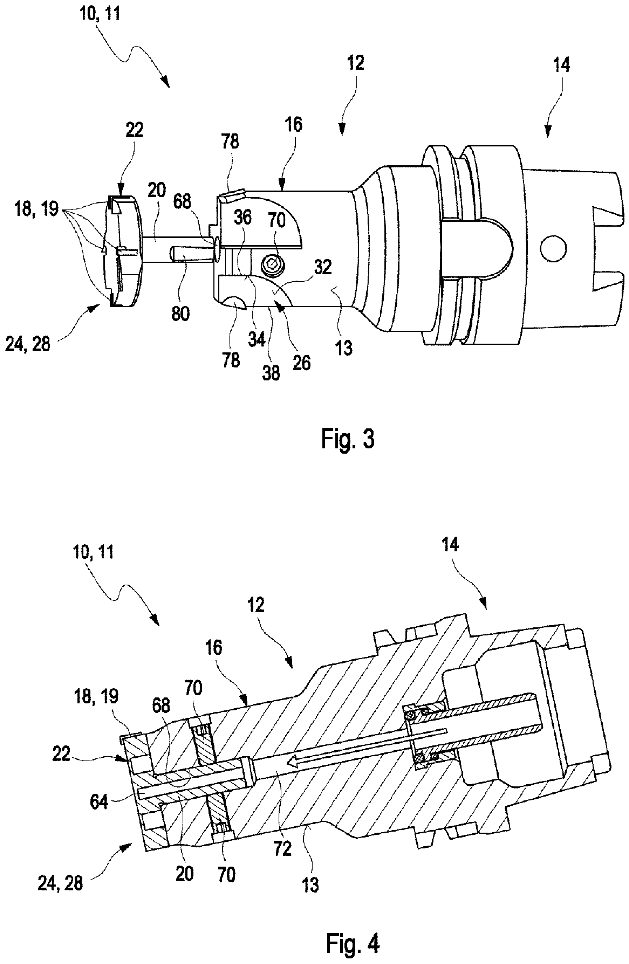

Die Kühlmittelzuführung 72 mündet in einen im Schneidkopf 22 vorgesehenen, sich durch den Befestigungszapfen 20 hindurch erstreckenden zentralen ersten Kühlmittelkanal 64. Der erste Kühlmittelkanal 64 verzweigt sich in vier radial verlaufende zweite Kühlmittelkanäle 74, welche in jeweilige Kühlmittelauslässe 62 münden, die in der zweiten Korridorfläche 48 vorgesehen und als parallel zu der Kopfschneidkante 40 verlaufende Nuten ausgebildet sind. Weitere Kühlmittelauslässe können vorgesehen sein, z. B. stirnseitig am Ende des ersten Kühlmittelkanals 64 oder im Bereich der Schneiden 18. Durch die Kühlmittelauslässe 62 wird ein Kühlmittelstrom (in Fig. 4, 5, 10 und 11 durch breite Pfeile gekennzeichnet) herangeführt, der der Schmierung und Kühlung der Schneidkanten 40, 42 dient und zugleich den Abtransport von Spänen 76 (Fig. 9) aus dem Spankorridor 50 und dem Spanmitnahmeräumen 26 unterstützt.

Die geschlossene Form des Spankorridors 50 verbessert hierbei den Strömungsverlauf des Kühlmittel-Späne-Gemisches und verhindert, dass sich Späne 76 umfangsseitig verhaken, oder Kühlmittel umfangsseitig aus dem Spankorridor 50 austritt. Die parallel zu den Kopfschneidkanten 40 verlaufenden Längskanten der Kühlmittelauslässe 62 wirken zugleich als Spanbrechkanten, die Späne 76 mitnehmen bzw. brechen können, um diese möglichst kleinteilig auszuformen und durch den Spankorridor 50 in den rückwärtigen Spanaufnahmeraum 26 zu transportieren.

Die separate Ausführung des Schneidkopfs 22, der lösbar oder auch dauerhaft am Grundkörper 16 befestigt werden kann, vereinfacht die Fertigung des Schneidwerkzeugs 10. So kann der relativ komplex strukturierte Schneidkopf 22 beispielsweise in einem auch als "3D-Druck" bekannten additiven Fertigungsverfahren hergestellt werden, während der übrige, weniger komplexe Teil des Schneidwerkzeugs 10 in konventioneller Weise gefertigt werden kann.

Zudem besteht zumindest bei der lösbaren Befestigung des Schneidkopfs 22 die Möglichkeit, diesen bei Verschleiß der Schneiden 18 auszutauschen, was die Ersatzkosten für den Benutzer deutlich reduziert. Gegenüber einer herkömmlichen Variante mit wechselbaren Schneiden in Form von Schneidplatten o. ä., die bei Bedarf durch einen Benutzer des Werkzeugs ausgetauscht werden, kann eine bessere Maßhaltigkeit der Schneidengeometrie gewährleistet werden, da Ersatzschneidköpfe mit hoher Maßhaltigkeit durch den Hersteller bereitgestellt werden können. Eine Fehljustierung durch den Benutzer kann ausgeschlossen werden.

Weiterhin können auch verschiedene Schneidköpfe z. B. mit unterschiedlichem Durchmesser oder unterschiedlicher Länge an demselben Grundkörper verwenden werden, wodurch ebenfalls Kosten gesenkt werden können.

### Bezugszeichenliste

- 10: Schneidwerkzeug
- 11: Reibwerkzeug
- 12: Werkzeugträger
- 13: Umfangseite des Werkzeugträgers
- 14: Einspannschaft
- 16: Grundkörper
- 18: Schneide
- 19: Reibschneide
- 20: Befestigungszapfen
- 22: Schneidkopf
- 24: Schneidkopfende
- 26: Spanaufnahmeraum
- 28: Schneidbereich
- 30: Spanleitfläche
- 32: Spanmitnahmefläche
- 34: Spanführungsfläche
- 36: Innenkante der Spanmitnahmefläche
- 38: Außenkante der Spanmitnahmefläche
- 40: Kopfschneidkante
- 42: Seitenschneidkante
- 43: Reibschneidkante
- 44: Spanspalt
- 46: erste Korridorfläche
- 48: zweite Korridorfläche
- 50: Spankorridor
- 52: Arbeitsdrehrichtung
- 54: dritte Korridorfläche
- 56: Spanführungsabschnitt
- 58: vierte Korridorfläche
- 60: Wandungsabschnitt
- 62: Kühlmittelauslass
- 64: erster Kühlmittelkanal
- 66: Umfangsseite des Schneidkopfes
- 68: Schneidkopfaufnahme
- 70: Klemmschraube
- 72: Kühlmittelzuführung
- 74: zweiter Kühlmittelkanal
- 76: Span
- 78: Zusatzschneide
- 80: Abflachung

## Patentansprüche

1. Schneidwerkzeug (10), insbesondere Reibwerkzeug (11) zur Herstellung oder Nachbearbeitung einer Stopfenbohrung,
- umfassend einen Einspannschaft (14) und einen Werkzeugträger (12) mit einem Schneidkopf (22) und zumindest einer an einem axialen Schneidkopfende (24) angeordneten Schneide (18), die zumindest teilweise als Reibschneide (19) ausgebildet ist, wobei der Werkzeugträger (12) einen Spanaufnahmeraum (26) umfasst, der ausgeformt ist, Materialspäne eines zu bearbeitenden Bauteils aufzunehmen, und der durch eine an die Schneide (18) angrenzende Spanmitnahmefläche (32) und eine hierzu abgewinkelte, insbesondere rechtwinklig ausgerichtete, Spanführungsfläche (34) begrenzt ist, welche von dem Schneidkopfende (24) in Richtung Einspannschaft (14) radial nach außen, insbesondere konkav oder abgewinkelt, verläuft und an einer Umfangsseite (13) des Werkzeugträgers (12) mündet,
- wobei der Schneidkopf (22) einen an die Schneide (18) angrenzenden Spankorridor (50) umfasst, **dadurch gekennzeichnet, dass** der Spankorridor (50) umseitig vollständig umschlossen ausgeformt ist, Materialspäne eines zu bearbeitenden Bauteils aufzunehmen, und der einen radial verlaufenden Spanspalt (44) und zumindest eine erste, eine zweite und eine dritte sich von dem Schneidkopfende (24) in axialer Richtung erstreckenden Korridorfläche (46, 48, 54) umfasst, wobei die erste Korridorfläche (46) zumindest einen Teilabschnitt der Spanmitnahmefläche (32) umfasst, wobei die zweite Korridorfläche (48) sich in axialer Richtung abgewinkelt oder gekrümmt erstreckt, um den Spankorridor (50) vom Spanspalt (44) her in Richtung Spanaufnahmeraum (26) aufzuweiten, und wobei die dritte Korridorfläche (54) den Spankorridor (50) an einer Umfangsseite (66) des Schneidkopfs (22) zumindest teilweise begrenzt und / oder verschließt,
wobei der Schneidkopf (22) als ein separates Bauteil ausgebildet ist und an einem Grundkörper (16) des Werkzeugträgers (12) lösbar oder dauerhaft befestigt ist, und dass der Spankorridor (50) innerhalb des Schneidkopfs (22) ausgebildet ist.

2. Schneidwerkzeug (10) nach Anspruch 1, **dadurch gekennzeichnet, dass** die Schneiden (18) als Reibschneiden (19) ausgebildet sind.

3. Schneidwerkzeug (10) nach Anspruch 1 oder 2, **dadurch gekennzeichnet, dass** eine Schneidkante (40) der Schneiden (18) zumindest teilweise an der Umfangsseite (13) des Werkzeugträgers (12) verläuft und eine Reibschneidkante (43) ausbildet.

4. Schneidwerkzeug (10) nach einem der vorhergehenden Ansprüche, **dadurch gekennzeichnet, dass** Spankorridor (50) zumindest teilweise im Bereich der Schneide (18) zur Umfangsseite (66) des Schneidkopfes (22) hin offen ausgebildet ist.

5. Schneidwerkzeug (10) nach einem der vorhergehenden Ansprüche, **dadurch gekennzeichnet, dass** die Schneide (18) eine erste Schneidkante (40) am axialen Schneidkopfende (24) und eine zweite Schneidkante (42) am Außenumfang (66) des Schneidkopfs (22) umfasst, wobei sich der Spanspalt (44) entlang der ersten und der zweiten Schneidkante (40, 42) erstreckt, so dass der Spankorridor (50) im Bereich der zweiten Schneidkante (42) zur Umfangsseite (66) des Werkzeugträgers (12) hin offen ist.

6. Schneidwerkzeug (10) nach einem der vorhergehenden Ansprüche, **dadurch gekennzeichnet, dass** der Schneidkopf (22) einen zentralen Befestigungszapfen (20) aufweist, welcher in einer zentralen Schneidkopfaufnahme (68) des Grundkörpers (16) aufgenommen ist.

7. Schneidwerkzeug (10) nach Anspruch 6, **dadurch gekennzeichnet, dass** der Befestigungszapfen (20) in der Schneidkopfaufnahme (68) des Grundkörpers (16) verklemmt oder verspannt ist.

8. Schneidwerkzeug (10) nach Anspruch 6 oder 7, **dadurch gekennzeichnet, dass** der Schneidkopf (22) einen ersten Kühlmittelkanal (64) aufweist welcher sich in axialer Richtung durch den Befestigungszapfen (20) hindurch erstreckt und mit einer im Grundkörper (16) vorgesehenen Kühlmittelzuführung (72) in Fluidverbindung steht.

9. Schneidwerkzeug (10) nach Anspruch 8, **dadurch gekennzeichnet, dass** der Schneidkopf (22) zumindest einen zweiten Kühlmittelkanal (74) aufweist welcher sich im Wesentlichen in radialer Richtung erstreckt und mit dem ersten Kühlmittelkanal (64) in Fluidverbindung steht.

10. Schneidwerkzeug (10) nach einem der vorhergehenden Ansprüche, **dadurch gekennzeichnet, dass** die zweite Korridorfläche (48) zumindest einen Kühlmittelauslass (62) aufweist.

11. Schneidwerkzeug (10) nach Anspruch 10, **dadurch gekennzeichnet, dass** der Kühlmittelauslass (62) als Nut ausgebildet ist, welche insbesondere parallel zu einer Kopfschneidkante (40) der Schneide (18) verläuft.

12. Schneidwerkzeug (10) nach einem der vorhergehenden Ansprüche, **dadurch gekennzeichnet, dass** die dritte Korridorfläche (54) an einem Wandungsabschnitt (60) des Schneidkopfs (22) ausgebildet ist, wobei eine der dritten Korridorfläche (54) gegenüberliegende Außenfläche des Wandungsabschnitts (60) einen Teilabschnitt einer Umfangsfläche des Schneidkopfs (22) bildet.

13. Schneidwerkzeug (10) nach einem der vorhergehenden Ansprüche, **dadurch gekennzeichnet, dass** der Spanaufnahmeraum (26) umfangsseitig offen ist.

14. Schneidwerkzeug (10) nach einem der vorhergehenden Ansprüche, **dadurch gekennzeichnet, dass** an dem Grundkörper (16) umfangsseitig zumindest eine Zusatzschneide (78) angeordnet ist, deren Schneidkante gegenüber einer Drehachse des Schneidwerkzeugs (10) geneigt verläuft.

15. Schneidwerkzeug (10) nach einem der vorhergehenden Ansprüche, **dadurch gekennzeichnet, dass** der Schneidkopf (22) mittels eines additiven Fertigungsverfahrens, insbesondere selektiven Laserschmelzens hergestellt ist.

16. Schneidkopf (22) für ein Schneidwerkzeug (10), insbesondere ein Reibwerkzeug (11), insbesondere zur Herstellung oder Nachbearbeitung einer Stopfenbohrung, welcher an einem Grundkörper eines Werkzeugträgers des Schneidwerkzeugs lösbar oder dauerhaft befestigbar ist, wobei der Schneidkopf (22) zumindest eine an einem axialen Schneidkopfende (24) angeordneten Schneide (18) aufweist die zumindest teilweise als Reibschneide ausgebildet ist, und einen an die Schneide (18) angrenzenden Spankorridor (50) umfasst, **dadurch gekennzeichnet, dass** der Spankorridor (50) umseitig vollständig umschlossen ausgeformt ist, Materialspäne eines zu bearbeitenden Bauteils aufzunehmen, und der einen radial verlaufenden Spanspalt (44) und zumindest eine erste, eine zweite und eine dritte sich von dem Schneidkopfende (24) in axialer Richtung erstreckenden Korridorfläche (46, 48, 54) umfasst, wobei die erste Korridorfläche (46) zumindest einen Teilabschnitt einer an die Schneide (18) angrenzenden Spanmitnahmefläche (32) umfasst, wobei die zweite Korridorfläche (48) sich in axialer Richtung abgewinkelt oder gekrümmt erstreckt, um den Spankorridor (50) vom Spanspalt (44) her aufzuweiten, und wobei die dritte Korridorfläche (54) den Spankorridor (50) an einer Umfangsseite (66) des Schneidkopfs (22) zumindest teilweise begrenzt und / oder verschließt.

## Claims

1. Cutting tool (10), in particular a reaming tool (11) for producing or post-machining of a plug bore,
- comprising a clamping shank (14) and a tool carrier (12) with a cutting head (22) and at least one cutter (18) which is arranged at an axial cutting head end (24) and which is at least partially designed as a reaming cutter (19), wherein said tool carrier (12) comprises a chip-receiving space (26) which is designed to receive material chips from a component to be machined, and which is bounded by a chip-removal surface (32) adjoining the cutter (18) and a chip-guiding surface (34) oriented at an angle, more particularly at a right angle thereto, and which extends radially outwards, more particularly in a concave or angled manner, from the cutting head end (24) in the direction of the clamping shank (14) and opens out on a circumferential side (13) of the tool carrier (12),
- wherein the cutting head (22) comprises a chip corridor (50) adjoining the cutter (18), characterized that the chip corridor (50) is designed to be completely enclosed on its circumferential side to receive material chips from a component to be machined, and which comprises a radially extending chip gap (44) and at least a first, a second and a third corridor surface (46, 48, 54) extending from the cutting head end (24) in an axial direction, wherein the first corridor surface (46) comprises at least one partial section of the chip-removal surface (32), wherein the second corridor surface (48) extends in an angled or curved manner in an axial direction to widen the chip corridor (50) starting from the chip gap (44) towards the chip-receiving space (26), and wherein the third corridor surface (54) at least partially bounds and/or closes the chip corridor (50) on a circumferential side (66) of the cutting head (22), wherein the cutting head (22) is designed as a separate component and is releasably or permanently attached to a main body (16) of the tool carrier (12), and the chip corridor (50) is formed within the cutting head (22).

2. Cutting tool (10) according to claim 1, **characterized in that** the cutters (18) are designed as reaming cutters (19).

3. Cutting tool (10) according to claim 1 or 2, **characterized in that** a cutting edge (40) of the cutters (18) extends at least partially on the circumferential side (13) of the tool carrier (12) and forms a reaming cutting edge (43).

4. Cutting tool (10) according to any one of the preceding claims, **characterized in that** the chip corridor (50) is formed at least partially in the region of the cutter (18) so as to be open towards the circumferential side (66) of the cutting head (22).

5. Cutting tool (10) according to any one of the preceding claims, **characterized in that** the cutter (18) comprises a first cutting edge (40) at the axial cutting head end (24) and a second cutting edge (42) at the outer circumference (66) of the cutting head (22), wherein the chip gap (44) extends along the first and second cutting edges (40, 42) so that the chip corridor (50) is open in the region of the second cutting edge (42) towards the circumferential side (66) of the tool carrier (12).

6. Cutting tool (10) according to any one of the preceding claims, **characterized in that** the cutting head (22) has a central fastening pin (20), which is accommodated in a central cutting head receptacle (68) of the main body (16).

7. Cutting tool (10) according to claim 6, **characterized in that** the fastening pin (20) is clamped or braced in the cutting head receptacle (68) of the main body (16).

8. Cutting tool (10) according to claim 6 or 7, **characterized in that** the cutting head (22) has a first coolant channel (64) which extends in an axial direction through the fastening pin (20) and is in fluid communication with a coolant supply (72) provided in the main body (16).

9. Cutting tool (10) according to claim 8, **characterized in that** the cutting head (22) has at least one second coolant channel (74) extending substantially in a radial direction and being in fluid communication with the first coolant channel (64).

10. Cutting tool (10) according to any one of the preceding claims, **characterized in that** the second corridor surface (48) comprises at least one coolant outlet (62).

11. Cutting tool (10) according to claim 10, **characterized in that** the coolant outlet (62) is formed as a groove which runs in particular parallel to a head cutting edge (40) of the cutter (18).

12. Cutting tool (10) according to any one of the preceding claims, **characterized in that** the third corridor surface (54) is formed on a wall portion (60) of the cutting head (22), wherein an outer surface of the wall portion (60) opposite the third corridor surface (54) forms a partial portion of a circumferential surface of the cutting head (22).

13. Cutting tool (10) according to any one of the preceding claims, **characterized in that** the chip-receiving space (26) is open on its circumferential side.

14. Cutting tool (10) according to any one of the preceding claims, **characterized in that** at least one auxiliary cutter (78) is arranged on the circumferential side of the main body (16), the cutting edge of which extends so as to be inclined relative to an axis of rotation of the cutting tool (10).

15. Cutting tool (10) according to any one of the preceding claims, **characterized in that** the cutting head (22) is produced by means of an additive production process, in particular selective laser melting.

16. Cutting head (22) for a cutting tool (10), in particular a reaming tool (11), in particular for producing or post-machining of a plug bore, which can be releasably or permanently attached to a main body of a tool carrier of the cutting tool, wherein the cutting head (22) has at least one cutter (18) which is arranged on an axial cutting head end (24) and which is at least partially designed as a reaming cutter, and comprises a chip corridor (50) adjoining the cutter (18), **characterized in that** the chip corridor (50) is designed to be completely enclosed on its circumferential side to receive material chips from a component to be to be machined, and which comprises a radially extending chip gap (44) and at least a first, a second and a third corridor surface (46, 48, 54) extending from the cutting head end (24) in an axial direction, wherein the first corridor surface (46) comprises at least a partial portion of a chip-removal surface (32) adjoining the cutter (18), wherein the second corridor surface (48) extends in an angled or curved manner in an axial direction to widen the chip corridor (50) starting from the chip gap (44), and wherein the third corridor surface (54) at least partially bounds and/or closes the chip corridor (50) on a circumferential side (66) of the cutting head (22).

## Revendications

1. Outil de coupe (10), en particulier outil d'alésage (11) pour la production ou le post-usinage d'un alésage de bouchon,
- comprenant une tige de serrage (14) et un porte-outil (12) avec une tête de coupe (22) et au moins un couteau (18) disposé à une extrémité axiale de la tête de coupe (24), qui est au moins partiellement conçu comme un couteau d'alésage (19), le porte-outil (12) présentant un espace de réception de copeaux (26) qui est conçu pour recevoir des copeaux de matériau d'un composant à usiner, et qui est délimité par une surface d'enlèvement des copeaux (32) adjacente au couteau (18) et une surface de guidage des copeaux (34) orientée selon un angle, en particulier selon un angle droit par rapport à celle-ci, qui s'étend radialement vers l'extérieur, en particulier de manière concave ou coudée, depuis l'extrémité de la tête de coupe (24) en direction de la tige de serrage (14) et débouche sur un côté périphérique (13) du porte-outil (12),
- dans lequel la tête de coupe (22) comprend un couloir à copeaux (50) adjacent au couteau (18), **caractérisé en ce que** le couloir à copeaux (50) est conçu pour recevoir des copeaux de matériau d'un composant à usiner, en étant complètement fermé sur son côté circonférentiel, et qui comprend une fente à copeaux (44) s'étendant radialement et au moins une première, une deuxième et une troisième surface de couloir (46, 48, 54) s'étendant depuis l'extrémité de la tête de coupe (24) dans une direction axiale, dans lequel la première surface de couloir (46) comprend au moins une section partielle de la surface d'enlèvement de copeaux (32), dans lequel la deuxième surface de couloir (48) s'étend de manière coudée ou incurvée dans une direction axiale pour élargir le couloir de copeaux (50) en partant de la fente à copeaux (44) vers l'espace de réception de copeaux (26), et dans lequel la troisième surface de couloir (54) délimite et/ou ferme au moins partiellement le couloir de copeaux (50) sur un côté circonférentiel (66) de la tête de coupe (22), dans lequel la tête de coupe (22) est conçue comme un composant séparé et est fixée de manière amovible ou permanente à un corps principal (16) du porte-outil (12), et le couloir à copeaux (50) est formé à l'intérieur de la tête de coupe (22).

2. Outil de coupe (10) selon la revendication 1, **caractérisé en ce que** les couteaux (18) sont conçues comme des couteaux d'alésage (19).

3. Outil de coupe (10) selon les revendications 1 ou 2, **caractérisé en ce qu'**une arête de coupe (40) des couteaux (18) s'étend au moins partiellement sur le côté circonférentiel (13) du porte-outil (12) et forme une arête de coupe d'alésage (43).

4. Outil de coupe (10) selon l'une quelconque des revendications précédentes, **caractérisé en ce que** le couloir à copeaux (50) est formé au moins partiellement dans la zone du couteau (18) de manière à être ouvert vers le côté circonférentiel (66) de la tête de coupe (22).

5. Outil de coupe (10) selon l'une quelconque des revendications précédentes, **caractérisé en ce que** le couteau (18) présente une première arête de coupe (40) à l'extrémité axiale de la tête de coupe (24) et une deuxième arête de coupe (42) sur la circonférence extérieure (66) de la tête de coupe (22), la fente à copeaux (44) s'étendant le long de la première et de la deuxième arête de coupe (40, 42), de sorte que le couloir à copeaux (50) soit ouvert dans la région de la deuxième arête de coupe (42) vers le côté circonférentiel (66) du porte-outil (12).

6. Outil de coupe (10) selon l'une quelconque des revendications précédentes, **caractérisé en ce que** la tête de coupe (22) présente une broche de fixation central (20), qui est logé dans un logement de tête de coupe central (68) du corps principal (16).

7. Outil de coupe (10) selon la revendication 6, **caractérisé en ce que** la broche de fixation (20) est serrée ou calée dans le logement de tête de coupe (68) du corps principal (16).

8. Outil de coupe (10) selon la revendication 6 ou 7, **caractérisé en ce que** la tête de coupe (22) présente un premier canal de liquide de refroidissement (64) qui s'étend dans une direction axiale à travers la broche de fixation (20) et est en communication fluidique avec un moyen d'alimentation en liquide de refroidissement (72) prévue dans le corps principal (16).

9. Outil de coupe (10) selon la revendication 8, **caractérisé en ce que** la tête de coupe (22) présente au moins un deuxième canal de liquide de refroidissement (74) s'étendant sensiblement dans une direction radiale et étant en communication fluidique avec le premier canal de liquide de refroidissement (64).

10. Outil de coupe (10) selon l'une quelconque des revendications précédentes, **caractérisé en ce que** la deuxième surface de couloir (48) comprend au moins une sortie de liquide de refroidissement (62).

11. Outil de coupe (10) selon la revendication 10, **caractérisé en ce que** la sortie de liquide de refroidissement (62) est réalisée sous la forme d'une rainure qui s'étend notamment parallèlement à une arête de coupe de tête (40) du couteau (18).

12. Outil de coupe (10) selon l'une quelconque des revendications précédentes, **caractérisé en ce que** la troisième surface de couloir (54) est formée sur une partie de paroi (60) de la tête de coupe (22), une surface extérieure de la partie de paroi (60) opposée à la troisième surface de couloir (54) formant une partie partielle d'une surface circonférentielle de la tête de coupe (22).

13. Outil de coupe (10) selon l'une quelconque des revendications précédentes, **caractérisé en ce que** l'espace de réception des copeaux (26) est ouvert sur son côté circonférentiel.

14. Outil de coupe (10) selon l'une quelconque des revendications précédentes, **caractérisé en ce que** sur le côté circonférentiel du corps principal (16) est disposé au moins un couteau auxiliaire (78) dont l'arête de coupe s'étend de manière inclinée par rapport à un axe de rotation de l'outil de coupe (10).

15. Outil de coupe (10) selon l'une quelconque des revendications précédentes, **caractérisé en ce que** la tête de coupe (22) est réalisée au moyen d'un procédé de fabrication additive, notamment par fusion sélective au laser.

16. Tête de coupe (22) pour un outil de coupe (10), en particulier un outil d'alésage (11), notamment pour la production ou le post-usinage d'un alésage de bouchon, qui peut être fixée de manière amovible ou permanente sur un corps principal d'un porte-outil de l'outil de coupe, la tête de coupe (22) présentant au moins un couteau (18) disposée à une extrémité axiale de la tête de coupe (24) et conçue au moins partiellement comme un couteau d'alésage, et comprend un couloir à copeaux (50) adjacent au couteau (18), **caractérisé en ce que** le couloir à copeaux (50) est conçu pour recevoir des copeaux de matériau d'un composant à usiner, en étant complètement fermé sur son côté périphérique, et présente une fente à copeaux (44) s'étendant radialement et au moins une première, une deuxième et une troisième surface de couloir (46, 48, 54) s'étendant depuis l'extrémité de la tête de coupe (24) dans une direction axiale, dans lequel la première surface de couloir (46) comprend au moins une partie partielle d'une surface d'enlèvement de copeaux (32) adjacente au couteau (18), dans lequel la deuxième surface de couloir (48) s'étend de manière coudée ou incurvée dans une direction axiale pour élargir le couloir de copeaux (50) en partant de la fente de copeaux (44), et dans lequel la troisième surface de couloir (54) délimite et/ou ferme au moins partiellement le couloir de copeaux (50) sur un côté circonférentiel (66) de la tête de coupe (22).
